(19) Europäisches Patentamt
European Patent Office
Office européen des brevets

(11) EP 4 095 185 B1

(12) EUROPEAN PATENT SPECIFICATION

(45) Date of publication and mention
of the grant of the patent:
27.08.2025 Bulletin 2025/35

(21) Application number: 21851405.7

(22) Date of filing: 26.07.2021

(51) International Patent Classification (IPC):
C08J 5/18 (2006.01)          C08J 3/075 (2006.01)
C08F 2/44 (2006.01)          C08L 1/02 (2006.01)
C08K 5/053 (2006.01)         C08F 20/00 (2006.01)
C08F 2/10 (2006.01)          C08F 220/06 (2006.01)
C08L 1/28 (2006.01)

(52) Cooperative Patent Classification (CPC):
(C-Sets available)
C08J 5/18; C08F 2/10; C08F 2/44; C08F 220/06;
C08K 5/053; C08L 1/284; C08L 1/286;
C08J 2333/02                                    (Cont.)

(86) International application number:
PCT/KR2021/009605

(87) International publication number:
WO 2022/025544 (03.02.2022 Gazette 2022/05)

(54) **PREPARATION METHOD FOR SUPER ABSORBENT POLYMER FILM**

HERSTELLUNGSVERFAHREN FÜR EINE SUPERABSORBIERENDE POLYMERFOLIE

PROCÉDÉ DE PRÉPARATION D'UN FILM POLYMÈRE SUPERABSORBANT

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.07.2020 KR 20200093233
23.07.2021 KR 20210097332

(43) Date of publication of application:
30.11.2022 Bulletin 2022/48

(73) Proprietor: LG Chem, Ltd.
Seoul 07336 (KR)

(72) Inventors:
• YOON, Kiyoul
Daejeon 34122 (KR)
• KANG, Seongkyun
Daejeon 34122 (KR)
• KIM, Yu Jin
Daejeon 34122 (KR)
• KIM, Gicheul
Daejeon 34122 (KR)
• CHOI, Hyeon
Daejeon 34122 (KR)
• PARK, Se Yeol
Daejeon 34122 (KR)

(74) Representative: Goddar, Heinz J.
Boehmert & Boehmert
Anwaltspartnerschaft mbB
Pettenkoferstrasse 22
80336 München (DE)

(56) References cited:
EP-A1- 0 700 673          WO-A1-2019/124536
JP-A- 2002 113 039        JP-A- 2016 112 475
KR-A- 20160 038 152       KR-A- 20200 035 860
KR-A- 20200 064 909       US-A1- 2021 100 684
US-B1- 6 242 504

(52) Cooperative Patent Classification (CPC): (Cont.)

C-Sets
**C08F 220/06, C08F 222/102**

**Description**

[TECHNICAL FIELD]

The present disclosure relates to a preparation method for a super absorbent polymer film and a super absorbent polymer film prepared thereby.

[BACKGROUND OF ART]

A super absorbent polymer (SAP) is a type of synthetic polymeric material capable of absorbing 500 to 1000 times its own weight of moisture. Various manufacturers have denominated it with different names, such as SAM (Super Absorbency Material), AGM (Absorbent Gel Material), and the like. Such super absorbent polymers started to be practically applied in sanitary products, and they are now being widely used not only for hygiene products such as disposable diapers for children, sanitary napkins, etc., but also for water retaining soil products for gardening, water stop materials for the civil engineering and construction, sheets for raising seedling, fresh-keeping agents for food distribution fields, materials for poultices, or the like.

In general, hygiene products such as various diapers, sanitary napkins, or pads for urinary incontinence include an absorber containing super absorbent polymer particles. It was common that the absorber mainly includes the super absorbent polymer particles and fluff pulp to properly fasten the super absorbent polymer particles while maintaining the shape of the absorber and hygiene products.

However, due to the presence of the fluff pulp, it was difficult to make the absorber and hygiene products slim and thin, and there was a problem such as poor wearability in which wearer's skin against the hygiene product becomes sweaty. Moreover, since the fluff pulp is mainly obtained from wood as a raw material, it has been contrary to the recent environmental protection trend, and the use of the fluff pulp has become one of the main reasons of increasing manufacturing costs of sanitary products.

In addition, current super absorbent polymers are mostly manufactured and used in the form of powder. This powder-type super absorbent polymer has limitation in the range of use and thinning, because it may be scattered or leaked when manufacturing sanitary materials or in actual use and should be used with a specific type of substrate. Further, since absorption performance of the absorber may vary depending on the content distribution of the super absorbent polymer particles, it is difficult to uniformly control the absorption characteristics.

Meanwhile, in order to solve the above problems, a sheet-type super absorbent polymer has been proposed.

For example, a method for preparing a sheet-type super absorbent polymer by kneading an acrylic acid-based monomer or pulverizing a hydrogel polymer obtained after polymerization to obtain a particulate hydrogel polymer, followed by molding is known. However, since a diameter of the hydrogel polymer particles is about 0.2 to 2.0 mm, the above method had a limitation in providing an ultra-thin sheet having a thickness of 0.5 mm or less, and there was a problem in that an auxiliary substance such as fluff pulp is still required to secure shape retention and absorbency.

Accordingly, there is a need for research on a new type of super absorbent polymer, which does not require an auxiliary substance such as fluff pulp, can be reduced in thickness, and exhibits excellent absorption properties, and a preparation method of the same.

[PRIOR ART DOCUMENTS]

Patent Document 1: Japanese Patent Publication No. 1995-154195

US 2021/100684 A1 discloses the preparation of a water-absorbent resin from a solution mixture comprising acrylic acid having at least partially neutralized acidic groups which undergoes polymerization in the presence of hydroxycellulose, polyethylene glycol diacrylate and polyoxyethylene sorbitane monostearate to form a particulate hydrogel. The hydrogel is further surface cross-linked and dried.

KR 20200035860 A discloses a superabsorbent polymer obtainable by a method comprising the steps of: preparing a monomer composition by mixing an acrylic acid-based monomer, which has an acid group and in which at least a part of the acid group is neutralized, a thickener, an internal crosslinking agent, an initiator, and a solvent; photopolymerizing the monomer composition so as to form a hydrogel polymer, and molding the hydrogel polymer into a sheet phase; and drying same so as to form a superabsorbent resin sheet.

EP 0 700 673 A1 discloses a method of preparing a superabsorbent polymer using a mask to vary the degree of cross-linking during photopolymerization.

US 6,242,504 B1 and KR 20200064909 A disclose to irradiate an adhesive film through a photomask in order to selectively modify its adhesion and wettability properties.

[DETAILED DESCRIPTION OF THE INVENTION]

[Technical Problem]

In order to solve the above problems, there are provided a preparation method for a film-type super absorbent polymer, which can replace the existing powder-type super absorbent polymer and has excellent absorption performance by controlling the cross-linking density.

[Technical Solution]

According to one embodiment of the present disclosure, there is provided a preparation method for a super absorbent polymer film, including the steps of:

preparing a monomer composition by mixing an acrylic acid-based monomer having at least partially neutralized acidic groups, a cellulose-based thickener, a moisturizing agent, a cross-linking agent, a polymerization initiator, and a solvent;
forming a monomer composition film by casting the monomer composition on a substrate;
forming a hydrogel polymer film by placing a photomask having one or more openings on the monomer composition film, and irradiating light on the photomask; and
drying the hydrogel polymer film.

According to another embodiment of the present disclosure, there is provided a super absorbent polymer film, obtainable by the preparation method of the present invention, including a polymer in which an acrylic acid-based monomer having at least partially neutralized acidic groups is polymerized in the presence of a cellulose-based thickener, a moisturizing agent, and a cross-linking agent, wherein a surface of the super absorbent polymer film includes two or more regions having different degrees of cross-linking.

Further embodiments are disclosed in the dependent claims.

**[ADVANTAGEOUS EFFECTS]**

According to the present disclosure, it is possible to prepare a super absorbent polymer film having a thin thickness and controlled cross-linking density, thereby exhibiting excellent absorption performance and high flexibility.

In addition, the super absorbent polymer film prepared according to the present disclosure can be manufactured into a product without scattering or leaking, and an auxiliary substance such as fluff pulp is unnecessary, so that it is possible to make products thinner and to reduce the manufacturing process and costs.

[BRIEF DESCRIPTION OF THE DRAWINGS]

FIG. 1 shows photographs of the photomasks used in Examples 1 to 9.
FIG. 2 is an infrared spectroscopy spectrum of the super absorbent polymer films of Examples 7 and 9.

[DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

Hereinafter, the present disclosure will be described in detail.

In the present disclosure, there is provided a preparation method for a super absorbent polymer in the form of a film that can be used as an absorber by itself without an auxiliary agent such as pulp due to its excellent absorbency, and is free from scattering or leaking.

In general, the super absorbent polymer is obtained by polymerizing an acrylic acid-based monomer in the presence of a cross-linking agent to obtain a hydrogel polymer, and then drying, pulverizing and classifying the hydrogel polymer to prepare a base resin, followed by performing surface modification. The super absorbent polymer prepared in this way is in the form of a powder having a particle size of about 200 to 600 $\mu$m, and is mixed and compounded with an auxiliary substance such as fluff pulp to be applied to the product.

However, the powder-type super absorbent polymer may scatter or leak from the product during the manufactur-

**EP 4 095 185 B1**

ing process of an absorbent core, and it is difficult to uniformly disperse the polymer in the product, making it difficult to uniformly control absorption performance. In addition, it requires an auxiliary substance, so that there is a limitation in thinning the product.

In addition, it is known that the existing sheet-type super absorbent polymer is manufactured by rolling a powder- or particulate-type super absorbent polymer or fixing the super absorbent polymer to a support such as a non-woven fabric for shape retention. However, the sheet-type super absorbent polymer prepared in this method has low process efficiency due to a complicated manufacturing method, and requires a lot of components other than the super absorbent polymer to be fixed to the support. Therefore, there is a limitation in increasing the content of the super absorbent polymer present in the final product, and absorption property is not good. In addition, even when a powder- or particulate-type super absorbent polymer or a particulate-type hydrogel polymer is rolled to form a sheet, it is necessary to undergo a mixing process with a molding agent and a molding process after polymerization of the monomer. Thus, the manufacturing method is complicated and there is a limitation in thinning the product. Further, in order to bind the super absorbent polymer and form a sheet, it is necessary to include a molding auxiliary substance such as fiber or pulp, so that the absorption property is also poor.

Accordingly, the present inventors have conducted research on a new type of super absorbent polymer that does not require an auxiliary substance such as pulp, can be thinned, does not scatter, and can be used as an absorber by itself, resulting in the present invention.

The super absorbent polymer film prepared according to the present disclosure is in the form of a thin film rather than a powder, so there is no risk of scattering or leaking from the product during handling, and can be used without a separate auxiliary substance such as fluff pulp, and exhibits excellent absorption properties by itself.

In the present disclosure, the super absorbent polymer film refers to a super absorbent polymer in the form of a flexible and thin layer or film having a moisture content of 15 wt% or less, or 12 wt% or less, preferably 11 wt% or less. Preferably, the moisture content of the super absorbent polymer film is 15 wt% or less, 12 wt% or less, 11 wt% or less, or 10 wt% or less, and 1 wt% or more, 2 wt% or more, 4 wt% % or more, or 6 wt% or more.

Meanwhile, the "moisture content" in the present disclosure indicates the amount of moisture contained in the sample as a percentage with respect to the weight of the sample before drying. That is, the moisture content can be calculated by dividing a value obtained by subtracting the weight after drying of the sample from the weight before drying of the sample by the weight before drying of the sample, and then **multiplying** by 100. At this time, the drying condition for measuring the moisture content is that the temperature is increased to about 150 °C and maintained at 150 °C, and the total drying time is 20 min including 5 min of a heating step.

The super absorbent polymer film prepared according to the present disclosure may have a moisture content of 15% or less, and may be in the form of a colorless, transparent, elastic, and flexible film.

The transparent super absorbent polymer film means that a total light transmittance with respect to visible light is 89.5% or more when the thickness is in the range of 0.001 to 0.5 mm. The total light transmittance of the super absorbent polymer film according to the embodiment of the present disclosure may be 90% or more, 90.4% or more, 91% or more, 91.5% or more, or 92% or more. The total light transmittance may be theoretically 100%, for example, it may be 99% or less.

In addition, the super absorbent polymer film of the present disclosure may have a yellow index of 2.6 or less, 2.5 or less, 2.4 or less, 2.3 or less, 1.9 or less, 1.5 or less, or 1.3 or less, when measured in accordance with ASTM D1925 with a thickness of 0.001 to 0.5 mm.

The preparation method for a super absorbent polymer film according to one embodiment of the present disclosure includes the steps of:

preparing a monomer composition by mixing an acrylic acid-based monomer having at least partially neutralized acidic groups, a cellulose-based thickener, a moisturizing agent, a cross-linking agent, a polymerization initiator, and a solvent;
forming a monomer composition film by casting the monomer composition on a substrate;
forming a hydrogel polymer film by placing a photomask having one or more openings on the monomer composition film, and irradiating light on the photomask; and
drying the hydrogel polymer film.

In the present disclosure, a monomer composition film is prepared from a monomer composition solution having a controlled viscosity by a solution casting method, and then polymerized and dried to prepare a super absorbent polymer in the form of a film.

In particular, in the present disclosure, the degree of cross-linking of the polymer is controlled by controlling the degree of transmission of light irradiated to each region of the monomer composition film with a photomask having one or more openings during photopolymerization, and thus, the super absorbent polymer film to be prepared may exhibit a further improved initial absorption rate.

In the preparation method of the present disclosure, the monomer composition, which is a raw material of the super absorbent polymer, contains an acrylic acid-based monomer having at least partially neutralized acidic groups, a cellulose-based thickener, a moisturizing agent, a polymerization initiator, and a solvent.

First, the acrylic acid-based monomer is a compound represented by the following Chemical Formula 1:

[Chemical Formula 1]     $R^1$-COOM$^1$

in Chemical Formula 1,

$R^1$ is a C2 to C5 alkyl group having an unsaturated bond, and
$M^1$ is a hydrogen atom, a monovalent or divalent metal, an ammonium group, or an organic amine salt.

Preferably, the acrylic acid-based monomer includes at least one selected from the group consisting of acrylic acid, methacrylic acid, and a monovalent metal salt, a divalent metal salt, an ammonium salt, and an organic amine salt thereof.

Herein, the acrylic acid-based monomers may be those having acidic groups which are at least partially neutralized. Preferably, the acrylic acid-based monomer partially neutralized with an alkali substance such as sodium hydroxide, potassium hydroxide, ammonium hydroxide, or the like may be used. A degree of neutralization of the acrylic acid-based monomer may be 40 to 95 mol%, 40 to 80 mol%, or 45 to 75 mol%. The range of the degree of neutralization can be adjusted according to final properties. An excessively high degree of neutralization causes the neutralized monomers to be precipitated, and thus polymerization may not readily occur, whereas an excessively low degree of neutralization may deteriorate the absorbency of the polymer.

In a preferred embodiment, potassium hydroxide (KOH) may be used as the alkali substance. In particular, when using potassium hydroxide, a super absorbent polymer film having better flexibility and dimensional stability may be prepared even with the moisture content of 10% or less.

The concentration of the acrylic acid-based monomer may be about 20 to about 60 wt%, preferably about 40 to about 50 wt%, based on the monomer composition including the raw materials of the super absorbent polymer and the solvent, and it may be appropriately selected in consideration of the reaction time and the reaction conditions. However, when the concentration of the monomer is excessively low, the yield of the super absorbent polymer is low and there may be a problem in economic efficiency. In contrast, when the concentration is excessively high, a problem may occur in the process such as some of the monomer is precipitated, and thus physical properties of the super absorbent polymer may be deteriorated.

Meanwhile, in the present disclosure, a thickener and a moisturizing agent are contained in the monomer composition so that the monomer composition can be applied in the form of a film by a solution casting method.

As the thickener and the moisturizing agent are contained at the same time, the monomer composition of the present disclosure may exhibit a viscosity suitable for casting in the form of a film, can maintain an appropriate moisture content in the polymerization process after film casting, and the super absorbent polymer film to be prepared may have high flexibility.

In the present disclosure, a cellulose-based thickener is used as the thickener, and specifically, at least one selected from the group consisting of nanocellulose, hydroxyethylcellulose, hydroxypropylcellulose, hydroxyethylmethylcellulose, hydroxypropylmethylcellulose, and sodium carboxymethylcellulose may be used. Preferably, nanocellulose, hydroxyethylcellulose, sodium carboxymethylcellulose, or a combination thereof may be used.

The cellulose-based thickener may be contained in an amount of 0.01 parts by weight or more, 0.1 parts by weight or more, 0.2 parts by weight or more, or 0.4 parts by weight or more, and 5 parts by weight or less, 3 parts by weight or less, 1 parts by weight or less, or 0.9 parts by weight or less based on 100 parts by weight of the solid content in the monomer composition.

Herein, the solid content in the monomer composition means the total content of a cellulose-based thickener, a moisturizing agent, a cross-linking agent, a thermal initiator, a photoinitiator, and a cross-linking agent excluding a solvent and an acrylic acid-based monomer.

If the content of the cellulose-based thickener is less than 0.01 parts by weight based on 100 parts by weight of the solid content in the monomer composition, sufficient thickening effect cannot be ensured, so it may be difficult to prepare a monomer composition film. Conversely, if it exceeds 5 parts by weight, the viscosity of the monomer composition becomes excessively high, so that the thickness of the film becomes thick, and it may be difficult to uniformly control the thickness of the film.

As the moisturizing agent, a substance normally used as a moisturizing component in pharmaceuticals, cosmetics, chemical products, and the like may be used without limitation. Examples of the moisturizing agent include at least one selected from the group consisting of polyhydric alcohols having two or more hydroxyl groups in a molecule, citric acid, and citrate.

Specifically, as the polyhydric alcohol, a C3 to C30 polyhydric alcohol having 3 to 12 hydroxyl groups in a molecule may be used. For example, the polyhydric alcohol may be at least one selected from the group consisting of glycerin; diglycerin; ethylene glycol; propylene glycol; butylene glycol; sorbitol; polyethylene glycol; polyglycerin-3; polyglycerin-6; polyglycerin-10; and polyglyceryl-10 distearate and a derivative thereof (C3 to C18). Among them, at least one selected from the group consisting of glycerin, diglycerin, ethylene glycol, propylene glycol, and sorbitol may be preferably used.

In addition, citric acid and/or citrate may also be used as the moisturizing agent. Examples of the citrate include triethylcitrate, methylcitrate, sodium citrate, trisodium 2-methylcitrate, and the like.

The moisturizing agent may be used in an amount of 5 parts by weight or more, 10 parts by weight or more, 20 parts by weight or more, or 30 parts by weight or more, and 70 parts by weight or less, 60 parts by weight or less, or 50 parts by weight or less based on 100 parts by weight of the acrylic acid-based monomer.

If the content of the moisturizing agent is less than 5 parts by weight based on 100 parts by weight of the acrylic acid-based monomer, the moisture content of the monomer composition film is not sufficient, so that the film may dry out or crumble in the subsequent polymerization and drying process and flexibility of the super absorbent polymer film to be prepared cannot be achieved. Conversely, if the content of the polyhydric alcohol exceeds 70 parts by weight based on 100 parts by weight of the acrylic acid-based monomer, there may be a problem in that absorbency of the super absorbent polymer film is reduced. Therefore, the content of the moisturizing agent preferably satisfies the above range.

The monomer composition contains a cross-linking agent for cross-linking the polymer. As the cross-linking agent, those used in the manufacture of existing super absorbent polymers may be used. The cross-linking agent may be a cross-linking agent having one or more ethylene-based unsaturated groups in addition to one or more functional groups which may react with a water-soluble substituent of the acrylic acid-based monomer; or a cross-linking agent having two or more functional groups which may react with a water-soluble substituent of the monomer and/or a water-soluble substituent formed by hydrolysis of the monomer.

As the specific example of the cross-linking agent, a C8-C12 bisacrylamide, bismethacrylamide, a poly(meth)acrylate of C2-C10 polyol, a poly(meth)allylether of C2-C10 polyol, or the like may be used. More specifically, at least one selected from the group consisting of N,N'-methylenebis(meth)acrylate, ethyleneoxy(meth)acrylate, polyethyleneoxy(meth)acrylate, propyleneoxy(meth)acrylate, glycerin diacrylate, glycerin triacrylate, trimethylol triacrylate, polyethylene glycol diacrylate, triallylamine, triaryl cyanurate, triallyl isocyanate, polyethylene glycol, diethylene glycol and propylene glycol may be used. In one embodiment, polyethylene glycol diacrylate may be used as the cross-linking agent.

This cross-linking agent may be contained in a concentration of 3000 ppm or less with respect to the monomer composition, so that the polymerized polymer can be cross-linked. In one embodiment, the cross-linking agent may be contained in 10 ppm or more, 50 ppm or more, or 100 ppm or more, and 3000 ppm or less, 2500 ppm or less, or 2000 ppm or less.

In the preparation method for the super absorbent polymer film of the present disclosure, the polymerization initiator generally used in the preparation of a super absorbent polymer may be used without limitation. However, even when the photopolymerization method is applied, a certain amount of heat is generated by UV radiation and the like, and some heat occurs as the polymerization reaction, an exothermal reaction, progresses. Therefore, the composition may additionally include the thermal polymerization initiator. In a preferred embodiment, a photopolymerization initiator and a thermal polymerization initiator may be used simultaneously as the polymerization initiator.

Herein, any compound which can form a radical by light such as UV rays may be used as the photopolymerization initiator without limitation.

For example, the photopolymerization initiator may be one or more compounds selected from the group consisting of benzoin ether, dialkyl acetophenone, hydroxyl alkylketone, phenyl glyoxylate, benzyl dimethyl ketal, acyl phosphine, and $\alpha$-aminoketone. Further, as the specific example of acyl phosphine, commercial lucirin TPO(2,4,6-Trimethylbenzoyldiphenylphosphine oxide), Irgacure 819(Phenylbis(2,4,6-trimethylbenzoyl)phosphine oxide), and the like may be used. More various photopolymerization initiators are well disclosed in "UV Coatings: Basics, Recent Developments and New Application (Elsevier, 2007)" written by Reinhold Schwalm, p 115, and the present disclosure is not limited thereto.

A concentration of the photopolymerization initiator in the monomer composition may be 10 ppm or more, 20 ppm or more, or 40 ppm or more, and 2000 ppm or less, 1000 ppm or less, 500 ppm or less, or 100 ppm or less. If the concentration of the photopolymerization initiator is excessively low, the polymerization rate may become slow, and if the concentration is excessively high, the molecular weight of the super absorbent polymer may become low and properties may be uneven.

Furthermore, as the thermal polymerization initiator, one or more initiators selected from the group consisting of a persulfate-based initiator, an azo-based initiator, hydrogen peroxide, and ascorbic acid may be used. Specifically, sodium persulfate ($Na_2S_2O_8$), potassium persulfate ($K_2S_2O_8$), ammonium persulfate (($NH_4)_2S_2O_8$), and the like may be used as examples of the persulfate-based initiators; and 2,2-azobis(2-amidinopropane) dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of azo-based initiators. More various thermal polymerization initiators are well disclosed in "Principle of Polymerization (Wiley, 1981)" written by Odian, p 203, and the present disclosure is not limited thereto.

A concentration of the thermal polymerization initiator in the monomer composition may be 10 ppm or more, 100 ppm or more, or 500 ppm or more, and 2000 ppm or less, 1500 ppm or less, or 1000 ppm or less. If the concentration of the thermal polymerization initiator is excessively low, additional thermal polymerization hardly occurs and the effect of adding the thermal polymerization initiator may be **insufficient.** If the concentration of the thermal polymerization initiator is excessively high, the molecular weight of the super absorbent polymer may become low and the properties may be uneven.

In the preparation method of the present disclosure, the monomer composition may further contain a plasticizer, a preservation stabilizer, an antioxidant, or the like, if necessary.

Raw materials such as acrylic acid-based unsaturated monomers, cellulose - based thickeners, moisturizing agents, cross linking agent, polymerizations initiator, and additives are prepared in the form of monomer composition solutions dissolved in a solvent.

Any solvent which can dissolve the components may be used without limitation, and for example, water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, N,N-dimethylacetamide, and the like may be used alone or in combination. For example, water may be used as the solvent.

In the present disclosure, the monomer composition exhibits a viscosity suitable for a solution casting method by containing a cellulose-based thickener and a moisturizing agent. Specifically, the viscosity at 25 °C of the monomer composition may be 100 mPa·s or more, 200 mPa·s or more, 300 mPa·s or more, or 330 mPa·s or more, and 5000 mPa·s or less, 2300 mPa·s or less, 2000 mPa·s or less, or 1600 mPa·s or less. The viscosity of the monomer composition may be measured with a viscometer (e.g., TV-22 manufactured by TOKI) under the conditions of spindle #1 and a rotational speed of 1 rpm.

If the viscosity of the monomer composition is too low, it may be difficult to cast the monomer composition to a uniform thickness. Conversely, if the viscosity of the monomer composition is too high, it is difficult to prepare a uniform monomer composition, and flowability of the monomer composition is low, so that processability is deteriorated and defoaming is difficult.

The monomer composition is prepared, and then casted on a substrate to prepare a monomer composition film. Then, it is polymerized in the presence of a photomask to form a hydrogel polymer film. Casting and polymerization of the monomer composition may be continuously performed through a roll-to-roll process.

First, a monomer composition film is prepared by applying a monomer composition on a substrate.

The material of the substrate is not particularly limited, but it is preferable to use a material in which the monomer composition is easily applied and the hydrogel polymer film is easily separated after polymerization.

Specifically, a polyethylene terephthalate (PET) film in which at least one surface is hydrophobically treated with silicone or fluorine, which is usually used as a release film, may be used as the substrate. For example, the substrate may be a PET film surface-treated with a siloxane-based polymer or polytetrafluoroethylene (Teflon®). However, the material of the substrate is not limited thereto, and a suitable substrate may be selected depending on the composition and properties of the monomer composition.

Unlike the general polymer solution casting method in which the solvent is removed after casting the polymer solution, the present disclosure immediately performs the drawing and polymerization process after the monomer composition is applied on the substrate so as not to decrease the moisture content.

If the moisture content of the monomer composition film is too low, components constituting the monomer composition may be precipitated before polymerization, and there may be a problem in that the film is broken after polymerization. Accordingly, the moisture content of the monomer composition film preferably satisfies the range of 30 wt% to 60 wt%, 30 wt% to 50 wt%, or 30 wt% to 45 wt%.

The thickness of the monomer composition film may be appropriately adjusted depending on the thickness of the desired super absorbent polymer film. Although the thickness of the monomer composition film hardly changes during the polymerization step, the thickness may decrease by about 10 to 40% or 15 to 35% while the moisture content decreases during the drying process of the hydrogel polymer film after polymerization. In consideration of this, a monomer composition film may be prepared with an appropriate thickness.

For example, the thickness of the monomer composition film may be 0.8 mm or less, 0.6 mm or less, or 0.5 mm or less, and 0.001 mm or more, or 0.01 mm or more, but is not limited thereto. It can be appropriately adjusted depending on the composition of the monomer composition, specific conditions in the polymerization and drying steps, and the thickness of the desired super absorbent polymer film.

Subsequently, a polymerization reaction is performed by irradiating light to the monomer composition film.

In the present disclosure, a photomask having one or more openings is used to control the degree of cross-linking for each region of the film during polymerization.

Specifically, a photomask having one or more openings is placed on the monomer composition film, and then a polymerization reaction is performed by irradiating light to the monomer composition film through the photomask.

The photomask may have a transmittance of 70% or less, 60% or less, 50% or less, 40% or less, or 20% or less with respect to electromagnetic waves in a wavelength range of 100 nm to 400 nm irradiated during polymerization. Alternatively, the photomask may have a transmittance of 0% with respect to electromagnetic waves in the above-described wavelength range, and may be substantially impermeable.

When the monomer composition film is polymerized by irradiating light in the presence of such a photomask, the light is blocked in the region masked by the photomask, thereby slowing the initiation and progress of polymerization. Accordingly, the degree of cross-linking in the region masked by the photomask is lower than the degree of cross-linking in the region where the openings of the photomask are located. Therefore, in the super absorbent polymer film to be prepared, a first region having a first degree of cross-linking and a second region having a second degree of cross-linking are mixed. Due to such a structure, an improved initial absorption rate may be exhibited compared to a super absorbent polymer having the same degree of cross-linking over the entire area.

The material of the photomask is not particularly limited as long as it has a shielding ability against electromagnetic waves in a wavelength range of 100 nm to 400 nm as described above, but it may be preferable to use a material having excellent releasability with a monomer composition film or a hydrogel polymer film after polymerization, and excellent durability to improve process speed and reduce manufacturing costs.

Specifically, as the material of the photomask, a stainless steel material coated with a fluorine-based resin such as Teflon (poly(1,1,2,2-tetrafluoroethylene), a carbon black-based material; a glass, Teflon resin, novolak resin, or polycarbonate resin containing a UV blocking dye; or the like may be used.

A total area of the openings of the photomask can be adjusted according to the UV shielding ability of the used photomask and the desired physical properties of the super absorbent polymer film.

For example, in the case of a photomask having a transmittance of 10% or less with respect to electromagnetic waves in a wavelength range of 100 nm to 400 nm, the area of the openings may be 30% or more, 35% or more, or 38% or more, and 70% or less, 65% or less, or 60% or less of the total area of the photomask.

If the area of the openings is too large, the difference in the degree of cross-linking over the entire area of the super absorbent polymer film is not substantially large, so that the effect of using the photomask cannot be obtained. Conversely, if the area of the openings is too small, sufficient cross-linking does not occur, so that strength is weakened, absorbency under pressure may be reduced, and a large amount of extractable components may be generated.

The shape and/or area of each opening of the photomask may be the same as or different from each other. That is, the photomask may have a plurality of openings of the same type, wherein the openings have the same shape and area. Alternatively, the photomask may have a plurality of openings of two or more types, wherein the openings have different shapes and/or areas, and are arranged randomly or in a constant pattern.

However, if the area of each opening is too small or too large, the effect of controlling the degree of cross-linking for each region by using a photomask cannot be sufficiently obtained. Accordingly, the area of each opening of the photomask may preferably be 1 mm$^2$ or more, 10 mm$^2$ or more, 20 mm$^2$ or more, or 50 mm$^2$ or more, and 2500 mm$^2$ or less, 2000 mm$^2$ or less, 1500 mm$^2$ or less, or 1000 mm$^2$ or less.

The shape of the opening of the photomask is not particularly limited, and may be a circular shape such as a circle and an oval, a polygonal shape such as a square and a rectangle, or the like. In addition, the photomask may have two or more openings having different sizes and shapes.

In one embodiment, each opening of the photomask may independently have a circular shape with a diameter of 2 mm or more, 5 mm or more, or 10 mm or more, and 50 mm or less, 30 mm or less, or 20 mm or less, or a square shape with one side of 5 mm or more, or 10 mm or more and 50 mm or less, or 40 mm or less. However, the present disclosure is not limited thereto, and various shapes satisfying the above-described area of the openings are possible.

The polymerization temperature may be appropriately adjusted depending on the composition of the monomer composition, but is preferably 40 °C or more, or 50 °C or more for smooth reaction. In addition, if the temperature is too high, the solvent evaporates and components constituting the monomer composition may be precipitated. Therefore, the polymerization temperature is preferably 90 °C or less or 80 °C or less.

During the polymerization, mechanical properties such as flexibility and strength of the hydrogel polymer film to be prepared may be controlled by optionally drawing the monomer composition film in the longitudinal direction (MD direction) while irradiating light. The tension applied to the monomer composition film during drawing may be 40 N/m or more, 45 N/m or more, 50 N/m or more, or 60 N/m or more, and 100 N/m or less, 90 N/m or less, or 70 N/m or less.

The moisture content of the hydrogel polymer film prepared through the **polymerization** step may be about 20 wt% or more, preferably 25 wt% or more, and 40 wt% or less, or 35 wt% or less. Accordingly, a final super absorbent polymer film is prepared by drying the hydrogel polymer film.

The temperature of the drying step may preferably be 80 to 150 °C, or 90 to 100 °C.

In addition, drying for about 5 to 30 minutes within the above temperature range may provide a super absorbent polymer film having the moisture content of 15 wt% or less, 12 wt% or less, 10 wt% or less, or 9 wt% or less, and 1 wt% or more, 2 wt% or more, 4 wt% or more, or 6 wt% or more.

The super absorbent polymer film prepared according to the preparation method is thin and exhibits excellent absorption properties and flexibility. In particular, the super absorbent polymer film to be prepared may exhibit better initial absorption properties by controlling the degree of photopolymerization for each region using a photomask. Since the super absorbent polymer film of the present disclosure can be used as an absorbent by itself without compounding with an auxiliary substance such as pulp, it can be suitably used for slim and thin-film products, and can exhibit excellent absorption performance without deformation of the product.

According to another embodiment of the present disclosure, there is provided a super absorbent polymer film including a polymer in which an acrylic acid-based monomer having at least partially neutralized acidic groups is polymerized in the presence of a cellulose-based thickener, a moisturizing agent, and a cross-linking agent, wherein a surface of the super absorbent polymer film includes two or more regions having different degrees of cross-linking.

Since the super absorbent polymer film of the present disclosure has a thickness of 0.5 mm or less and does not require a separate auxiliary substance, it is possible to provide a thinner absorber compared to the existing powder-type super absorbent polymer. Preferably, the thickness of the super absorbent polymer film may be 0.5 mm or less, 0.4 mm or less, 0.3 mm or less, 0.2 mm or less, or 0.1 mm or less and 0.001 mm or more, 0.005 mm or more, 0.01 mm or more, or 0.05 mm or more.

The super absorbent polymer film prepared according to the present disclosure exhibits excellent absorption performance while being thin. In particular, the super absorbent polymer film of the present disclosure includes a first region having a first degree of cross-linking and a second region having a second degree of cross-linking, thereby exhibiting an improved initial absorption rate compared to a super absorbent polymer having a single degree of cross-linking. Preferably, the first region and the second region may form a regular pattern.

The difference in the degree of cross-linking between the first region and the second region can be confirmed by a tackiness test or infrared spectroscopy.

The region having a low degree of cross-linking in the super absorbent polymer film has a high residual rate and is not easily peeled off in the tackiness test compared to the region having a high degree of cross-linking due to the free main chain and components such as a cross-linking agent. Therefore, the difference in the degree of cross-linking can be confirmed by comparing tackiness of each region of the super absorbent polymer film.

Alternatively, a difference in the degree of cross-linking may be confirmed by performing IR Spectroscopy on each region of the super absorbent polymer film.

Specifically, the peak intensity in the 3000 to 3300 $cm^{-1}$ region corresponding to O-H absorption band of a carboxyl group in the IR spectrum may appear different in the first region and in the second region of the super absorbent polymer film of the present disclosure. The O-H peak is a peak derived from a carboxyl group included in the main chain formed by polymerization of an acrylic acid-based monomer (hereinafter, referred to as main chain). The higher the degree of cross-linking of the super absorbent polymer film, the weaker the hydrogen bonding force between water molecule contained in the film and the main chain and the (O=C)-O-H...O(-H)-C=O hydrogen bonding force between the main chains. Thus, the peak intensity becomes weaker as the degree of cross-linking increases.

For example, the intensity of the O-H peak in a region having a lower degree of cross-linking among the first region and the second region may be 1.05 to 2.0 times, or 1.05 to 1.5 times the intensity in a region having a higher degree of cross-linking.

In addition, the difference in the degree of cross-linking between each region can be confirmed by comparing the intensity of the peak derived from the cross-linking agent on the IR spectrum. Specifically, when a cross-linking agent having an ether bond in the molecule is used, the peak intensity in the 900 to 1100 $cm^{-1}$ region corresponding to C-O bond of the ether may appear different in the first region and in the second region of the super absorbent polymer film.

Specifically, the peak intensity of the C-O bond in a region having a higher degree of cross-linking among the first region and the second region, i.e., in a region where the openings of the photomask are located during polymerization may be 1.05 to 2.0 times, or 1.2 to 1.5 times the peak intensity in a region having a lower degree of cross-linking, i.e., in a region masked by the photomask during polymerization. The higher the degree of cross-linking, the higher the density between the main chains and the stronger the absorption intensity of the C-O peak.

The super absorbent polymer film exhibits excellent absorption properties with a centrifugal retention capacity (CRC) of 20 g/g or more, 22 g/g or more, or 25 g/g or more when measured in accordance with EDANA WSP 241.2. The higher centrifugal retention capacity can be evaluated as the better, and there is no theoretical upper limit, but may be, for example, 50 g/g or less, or 48 g/g or less.

The initial absorption rate can be obtained by cutting the super absorbent polymer film to a size of 12 cm*12 cm, and then measuring the time taken for the film to absorb 27 ml of a NaCl (0.9%) solution. The super absorbent polymer film has an excellent initial absorption rate of 60 seconds or less, 55 seconds or less, or 50 seconds or less. The initial absorption rate may be, for example, 5 seconds or more, or 10 seconds or more.

A method for measuring the centrifugal retention capacity and initial absorption rate of the super absorbent polymer film with respect to physiological saline may be specified in Examples to be described later.

As such, the super absorbent polymer film of the present disclosure has excellent absorbency as well as flexibility and elasticity, and thus can be used for various purposes such as diapers, waterproofing and reinforcing materials for wires and cables, electrolyte absorbers, flame retardants, wound protection agents, fresh-keeping agents for food, water retaining soil products, etc.

The shape of the super absorbent polymer film is not particularly limited as long as the super absorbent polymer film has a thickness of 0.5 mm or less. That is, the super absorbent polymer film may be in the form of a flat film having a constant thickness without irregularities on the surface, or may have a pattern formed on the surface to improve flowability of the liquid. In this case, the shape of the pattern is not particularly limited, and the pattern may be formed by variously adjusting the length, width, depth, etc. of the recess and convex portions, if necessary.

Hereinafter, the present invention will be described in more detail with the following preferred examples, but these examples are provided for illustrative purposes only.

[Examples]

## Examples 1 to 9

(1) Preparation of monomer composition

A neutralized solution in which 70 mol% of acrylic acid was neutralized was prepared by mixing 55 g of acrylic acid, 66.6 g of a 45 wt% potassium hydroxide (KOH) solution, and 55 g of water.

A cross-linking agent (polyethylene glycol diacrylate (PEGDA), MW=400, manufactured by Aldrich), a thickener, a moisturizing agent, sodium persulfate as a thermal polymerization initiator, and Irgacure 819 as a photoinitiator were added to the neutralized solution in the amounts shown in Tables 1 and 2 below to prepare a monomer composition. Hydroxyethyl cellulose (HEC, Natrosol 250HR from Ashland) or sodium carboxymethyl cellulose (CMC, weight average molecular weight 250,000, substitution degree 0.7) was used as the thickener, and glycerin or propylene glycol was used as the moisturizing agent.

In Tables 1 and 2 below, the content of the thickener is expressed in parts by weight based on 100 parts by weight of the solid content of the monomer composition, the content of the moisturizing agent is expressed in parts by weight based on 100 parts by weight of acrylic acid, and the contents of the thermal polymerization initiator, photopolymerization initiator, and cross-linking agent are expressed in ppm based on a total amount of the monomer composition.

A viscosity of the prepared monomer composition at 25 °C was measured using TV-22 manufactured by TOKI under the conditions of spindle # 1, 1 rpm, and the results are shown in Table 1 below.

(2) Preparation of super absorbent polymer film

The monomer composition was coated on one surface of a polyethylene terephthalate (PET) release film (Mitsubishi MRL film) to form a monomer composition film having a width of 25 cm, a length of 15 cm, and a thickness of 0.2 mm (moisture content of 30%). A comma coater (Gap 700 $\mu$m) was used for coating, and line speed was 0.3 m/min.

Then, a transparent glass substrate was placed on the monomer composition film, and the photomasks shown in Tables 1 and 2 were placed thereon. Thereafter, polymerization was performed by irradiating UV light (370 mJ/cm$^2$) with LEDs having a wavelength of 365 nm and 395 nm to form a hydrogel polymer film (polymerization temperature of 100 °C).

Subsequently, the prepared hydrogel polymer was dried at a temperature of 110 °C for 15 minutes to prepare a super absorbent polymer film (SAP film).

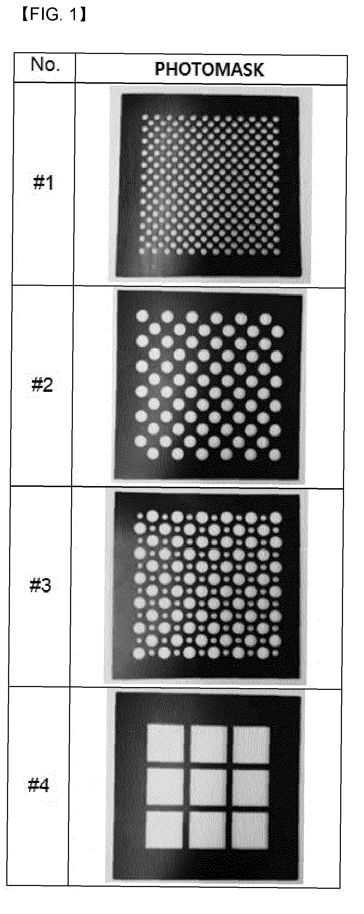

In the above Examples, photomasks having openings formed on TEFLON® coated SUS304 (transmittance of 40 to 56% with respect to ultraviolet light in the wavelength range of 300 to 400 nm) were used. A photomask used in each Example is shown in FIG.1.

## Reference Example 1

A super absorbent polymer film was prepared in the same manner as in Example, except that a photomask was not used during polymerization of the monomer composition film.

## Experimental Example 1: Evaluation of absorbency of super absorbent polymer film

The physical properties of the super absorbent polymer films of Examples and Reference Example were evaluated by the following method, and the results are summarized in Tables 1 and 2 below.

(1) Initial absorption rate

Each of the super absorbent polymer films prepared in Examples and Comparative Examples was cut to have a size of 12 cm in width * 12 cm in length, and the time taken for the film to absorb 27 ml of a NaCl (0.9%) solution was measured.

(2) Centrifugal retention capacity (CRC, g/g)

The centrifugal retention capacity (CRC) was measured in accordance with EDANA WSP 241.2. The moisture content of the super absorbent polymer film of each Example and Comparative Example to be measured is as shown in Tables 1 and 2 below, and the centrifugal retention capacity was measured without adjusting the moisture content.
Specifically, the super absorbent polymer film was cut to have a weight (W0) of 0.08 to 0.12 g, put in a non-woven envelope, and sealed. Then, it was immersed in 0.9 wt% sodium chloride aqueous solution (physiological saline) at room temperature. After 30 minutes, the envelope was centrifuged at 250G for 3 minutes to drain, and the weight W2 (g) of the envelope was measured. Further, after carrying out the same operation without using the polymer, the weight W1 (g) of the envelope was measured. Then, CRC (g/g) was calculated by using the obtained weight values according to the following equation.

[Equation 1]

$$CRC\ (g/g) = \{[W2(g) - W1(g)]/W0(g)\} - 1$$

[Table 1]

|  | Example 1 | Example 2 | Example 3 | Example 4 | Example 5 | Example 6 |
|---|---|---|---|---|---|---|
| Photomask | #1 | #1 | #1 | #1 | #1 | #1 |
| Area of openings (%) | 39.3 | 39.3 | 39.3 | 39.3 | 39.3 | 39.3 |
| Shape of openings | Circle (5 mm in diameter) | Circle (5 mm in diameter) | Circle (5 mm in diameter) | Circle (5 mm in diameter) | Circle (5 mm in diameter) | Circle (5 mm in diameter) |
| Type and content (parts by weight) of thickener | HEC 0.85 | HEC 0.85 | HEC 0.85 | HEC 0.85 | CMC 0.68 | HEC 0.45 |
| Type and content (parts by weight) of moisturizing agent | Glycerin 40 | Glycerin 40 | Glycerin 40 | Glycerin 40 | Glycerin 40 | propylen e glycol 40 |
| Photoinitiator (ppm) | 80 | 80 | 80 | 80 | 80 | 80 |
| Thermal initiator (ppm) | 1000 | 1000 | 1000 | 1000 | 1000 | 1000 |
| Cross-linking agent (ppm) | 500 | 1000 | 2000 | 4000 | 2000 | 2000 |
| Viscosity of monomer composition (cP) | 922 | 922 | 922 | 922 | 332 | 562 |
| Thickness of monomer composition film (mm) | 0.2 | 0.2 | 0.2 | 0.2 | 0.2 | 0.2 |
| Thickness of super absorbent polymer film (mm) | 0.16 | 0.16 | 0.17 | 0.16 | 0.20 | 0.19 |
| Moisture content of super absorbent polymer film (%) | 9.8 | 9.4 | 9.4 | 9.7 | 11.1 | 11.7 |
| Initial absorption rate (s) | 64 | 69 | 76 | 79 | 72 | 68 |
| CRC (g/g) | 32.2 | 27.7 | 24.3 | 20.3 | 28.5 | 23.7 |

[Table 2]

|  | Example 7 | Example 8 | Example 9 | Reference Example 1 |
|---|---|---|---|---|
| Photomask | #2 | #3 | #4 | none |
| Area of openings (%) | 39.3 | 49.1 | 56.3 | - |
| Shape of openings | Circle (10 mm in diameter) | Circle (5 m and 10 mm mixed in diameter) | Square (30 mm in side length) | - |
| Type and content (parts by weight) of thickener | HEC 0.85 | HEC 0.75 | HEC 0.75 | HEC 0.85 |
| Type and content (parts by weight) of moisturizing agent | Glycerin 40 | Glycerin 40 | Glycerin 40 | Glycerin 40 |
| Photoinitiator (ppm) | 80 | 80 | 80 | 80 |
| Thermal initiator (ppm) | 1000 | 1000 | 1000 | 1000 |
| Cross-linking agent (ppm) | 2000 | 2000 | 2000 | 2000 |
| Viscosity of monomer composition (cP) | 922 | 1177 | 1177 | 922 |
| Thickness of monomer composition film (mm) | 0.2 | 0.2 | 0.2 | 0.2 |
| Thickness of super absorbent polymer film (mm) | 0.17 | 0.17 | 0.16 | 0.17 |
| Moisture content of super absorbent polymer film (%) | 10.1 | 9.5 | 9.4 | 9.1 |
| Initial absorption rate (s) | 73 | 64 | 59 | 101 |
| CRC (g/g) | 28.3 | 25.9 | 33.9 | 26.6 |

As a result of the experiment, it was confirmed that the super absorbent polymer films of Examples 1 to 9 had a more improved initial absorption rate while exhibiting similar centrifugal retention capacity as compared to the super absorbent polymer film of Reference Example 1. From this, it was confirmed that it is possible to obtain an improved initial absorbency while maintaining excellent basic absorption properties by making the cross-linking density different from each other in the surface of the super absorbent polymer film.

**Experimental Example 2: Evaluation of degree of cross-linking for each region of super absorbent polymer film**

(1) Tackiness test

In order to confirm the difference in the degree of cross-linking for each region of the super absorbent polymer films of Examples, a tackiness test using a scotch tape was performed.
First, when preparing the super absorbent polymer film of Example 7, a region masked by a photomask (light-shielding region) and a region not masked (light-transmitting region) were marked on the monomer composition film, and then polymerization and drying were performed to prepare a super absorbent polymer film.
Thereafter, scotch tapes with the corresponding area were attached to each of the light-shielding region and the light-transmitting region of the super absorbent polymer film, and it was checked whether or not they were easily peeled off when peeled off at 90 degrees with respect to the attached surface after 30 seconds.
As a result, it was confirmed that the light-shielding region masked by the photomask during polymerization had a low degree of cross-linking, so that the scotch tape was not easily peeled off, and the light-transmitting region had a high degree of cross-linking, so that the scotch tape was easily peeled off without stickiness.

(2) IR Spectroscopy

The light-shielding region and the light-transmitting region of the super absorbent polymer film of Example 7 used for the tackiness test were separated, and subjected to IR spectroscopy, respectively. In addition, IR spectroscopy was also performed on the light-transmitting region of the super absorbent polymer film of Example 9.

Agilent Cary 630 FT-IR spectrometer was used for the analysis, and the infrared absorbance was measured in the wave number range of 4000 to 350 cm$^{-1}$.

The moisture content of the super absorbent polymer film to be measured is as described in Table 2 above, and IR spectroscopy was performed by hanging the film on a cell holder without any other pretreatment.

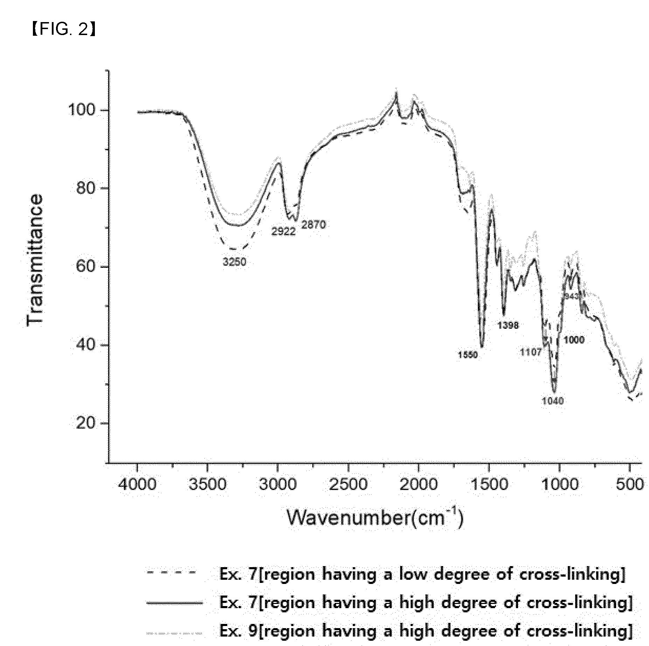

The IR spectrum obtained by the above method is shown in FIG. 2.

Referring to FIG. 2, it was confirmed that the light-transmitting region of the super absorbent polymer film had a lower intensity of O-H absorption band (3250 cm$^{-1}$) of a carboxylic acid in the main chain compared to the light-shielding region. Specifically, the intensity of the 3250 cm$^{-1}$ peak in the light-shielding region (region having a low degree of cross-linking) of Example 7 was 1.09 times stronger than the intensity of the above peak in the light-transmitting region (region having a high degree of cross-linking) of Example 7. In addition, since the intensity of the 3250 cm$^{-1}$ peak in the light-transmitting region of Example 9 was weaker than the peak intensity in the light-transmitting region of Example 7, it could be confirmed that the higher the area of openings of the photomask, the higher the degree of curing and cross-linking.

In addition, when comparing the intensity of the peaks (1107, 1040, and 943 cm$^{-1}$) corresponding to C-O bond of ether in PEGDA which is a cross-linking agent, it could be confirmed that the peak intensity in the light-transmitting region of Example 7 was 1.22 times stronger than the peak intensity in the light-shielding region of Example 7.

## Claims

1. A preparation method for a super absorbent polymer film, comprising the steps of:

   preparing a monomer composition by mixing an acrylic acid-based monomer having at least partially neutralized acidic groups, a cellulose-based thickener, a moisturizing agent, a cross-linking agent, a polymerization initiator, and a solvent;
   forming a monomer composition film by casting the monomer composition on a substrate;
   forming a hydrogel polymer film by placing a photomask having one or more openings on the monomer composition film, and irradiating light on the photomask; and
   drying the hydrogel polymer film.

2. The preparation method for a super absorbent polymer film of Claim 1,
   wherein a total area of the openings of the photomask is 30 to 70%.

3. The preparation method for a super absorbent polymer film of Claim 1,
   wherein the photomask has a transmittance of 70% or less with respect to electromagnetic waves in a wavelength range of 100 to 400 nm.

4. The preparation method for a super absorbent polymer film of Claim 1,
   wherein each opening of the photomask independently has an area of 1 to 2500 mm$^2$.

5. The preparation method for a super absorbent polymer film of Claim 1,
   wherein each opening of the photomask independently has a circular shape with a diameter of 2 to 50 mm.

6. The preparation method for a super absorbent polymer film of Claim 1,
   wherein the cellulose-based thickener is at least one selected from the group consisting of nanocellulose, hydroxyethylcellulose, hydroxypropylcellulose, hydroxyethylmethylcellulose, hydroxypropylmethylcellulose, and sodium carboxymethylcellulose.

7. The preparation method for a super absorbent polymer film of Claim 1,
   wherein the moisturizing agent is at least one selected from the group consisting of glycerin; diglycerin; ethylene glycol; propylene glycol; butylene glycol; sorbitol; polyethylene glycol; polyglycerin-3; polyglycerin-6; polyglycerin-10; and polyglyceryl-10 distearate and a derivative thereof (C3 to C18); citric acid; triethyl citrate; methyl citrate; sodium citrate; and trisodium 2-methylcitrate.

8.  The preparation method for a super absorbent polymer film of Claim 1,
    wherein the cellulose-based thickener is contained in an amount of 0.01 to 5 parts by weight based on 100 parts by weight of solid content in the monomer composition.

9.  The preparation method for a super absorbent polymer film of Claim 1,
    wherein the moisturizing agent is contained in an amount of 5 to 70 parts by weight based on 100 parts by weight of the acrylic acid-based monomer.

10. The preparation method for a super absorbent polymer film of Claim 1,
    wherein the monomer composition has a viscosity at 25 °C of 100 mPa·s to 5000 mPa·s, wherein the viscosity is measured as disclosed in the specification.

11. A super absorbent polymer film, obtainable by a preparation method according to claim 1, comprising a polymer in which an acrylic acid-based monomer having at least partially neutralized acidic groups is polymerized in the presence of a cellulose-based thickener, a moisturizing agent, and a cross-linking agent, wherein a surface of the super absorbent polymer film comprises two or more regions having different degrees of cross-linking.

12. The super absorbent polymer film of Claim 11,
    wherein a first region having a first degree of cross-linking and a second region having a second degree of cross-linking form a regular pattern.

13. The super absorbent polymer film of Claim 11,
    wherein a centrifugal retention capacity (CRC) is 20 g/g or more when measured in accordance with EDANA WSP 241.2.

14. The super absorbent polymer film of Claim 11,
    wherein an initial absorption rate is 80 seconds or less, which is defined as the time taken to absorb 27 ml of a NaCl (0.9%) solution after cutting the super absorbent polymer film to a size of 12cm* 12cm.


**Patentansprüche**

1.  Herstellungsverfahren für einen superabsorbierenden Polymerfilm, umfassend die Schritte:

    Herstellen einer Monomerzusammensetzung durch Mischen eines Monomers auf Acrylsäurebasis mit zumindest teilweise neutralisierten sauren Gruppen, eines Verdickungsmittels auf Cellulosebasis, eines Befeuchtungsmittels, eines Vernetzungsmittels, eines Polymerisationsinitiators und eines Lösungsmittels;
    Bilden eines Monomerzusammensetzungsfilms durch Gießen der Monomerzusammensetzung auf ein Substrat;
    Bilden eines Hydrogelpolymerfilms durch Platzieren einer Fotomaske mit einer oder mehreren Öffnungen auf dem Monomerzusammensetzungsfilm und Bestrahlen der Fotomaske mit Licht; und
    Trocknen des Hydrogelpolymerfilms.

2.  Herstellungsverfahren für einen superabsorbierenden Polymerfilm nach Anspruch 1,
    wobei eine Gesamtfläche der Öffnungen der Fotomaske 30 bis 70 % beträgt.

3.  Herstellungsverfahren für einen superabsorbierenden Polymerfilm nach Anspruch 1,
    wobei die Fotomaske eine Durchlässigkeit von 70 % oder weniger in Bezug auf elektromagnetische Wellen in einem Wellenlängenbereich von 100 bis 400 nm aufweist.

4.  Herstellungsverfahren für einen superabsorbierenden Polymerfilm nach Anspruch 1,
    wobei jede Öffnung der Fotomaske unabhängig eine Fläche von 1 bis 2500 mm² aufweist.

5.  Herstellungsverfahren für einen superabsorbierenden Polymerfilm nach Anspruch 1,
    wobei jede Öffnung der Fotomaske unabhängig eine Kreisform mit einem Durchmesser von 2 bis 50 mm aufweist.

6.  Herstellungsverfahren für einen superabsorbierenden Polymerfilm nach Anspruch 1,
    wobei das Verdickungsmittel auf Cellulosebasis zumindest eines ist, das aus der Gruppe ausgewählt ist, die aus Nanocellulose, Hydroxyethylcellulose, Hydroxypropylcellulose, Hydroxyethylmethylcellulose, Hydroxypropylmethylcellulose und Natriumcarboxymethylcellulose besteht.

7. Herstellungsverfahren für einen superabsorbierenden Polymerfilm nach Anspruch 1, wobei das Befeuchtungsmittel zumindest eines ist, das aus der Gruppe ausgewählt ist, die aus Glycerin; Diglycerin; Ethylenglykol; Propylenglykol; Butylenglykol; Sorbit; Polyethylenglykol; Polyglycerin-3; Polyglycerin-6; Polyglycerin-10 und Polyglyceryl-10-distearat und einem Derivat davon (C3 bis C18); Citronensäure; Triethylcitrat; Methylcitrat; Natriumcitrat und Trinatrium-2-methylcitrat besteht.

8. Herstellungsverfahren für einen superabsorbierenden Polymerfilm nach Anspruch 1, wobei das Verdickungsmittel auf Cellulosebasis in einer Menge von 0,01 bis 5 Gewichtsteilen, bezogen auf 100 Gewichtsteile Feststoffgehalt in der Monomerzusammensetzung, enthalten ist.

9. Herstellungsverfahren für einen superabsorbierenden Polymerfilm nach Anspruch 1, wobei das Befeuchtungsmittel in einer Menge von 5 bis 70 Gewichtsteilen, bezogen auf 100 Gewichtsteile des Monomers auf Acrylsäurebasis, enthalten ist.

10. Herstellungsverfahren für einen superabsorbierenden Polymerfilm nach Anspruch 1, wobei die Monomerzusammensetzung eine Viskosität bei 25 °C von 100 mPa · s bis 5000 mPa · s aufweist, wobei die Viskosität wie in der Beschreibung offenbart gemessen wird.

11. Superabsorbierender Polymerfilm, erhältlich durch ein Herstellungsverfahren nach Anspruch 1, umfassend ein Polymer, in dem ein Monomer auf Acrylsäurebasis mit zumindest teilweise neutralisierten sauren Gruppen in Gegenwart eines Verdickungsmittels auf Cellulosebasis, eines Befeuchtungsmittels und eines Vernetzungsmittels polymerisiert ist, wobei eine Oberfläche des superabsorbierenden Polymerfilms zwei oder mehr Bereiche mit unterschiedlichen Vernetzungsgraden umfasst.

12. Superabsorbierender Polymerfilm nach Anspruch 11, wobei ein erster Bereich mit einem ersten Vernetzungsgrad und ein zweiter Bereich mit einem zweiten Vernetzungsgrad ein regelmäßiges Muster bilden.

13. Superabsorbierender Polymerfilm nach Anspruch 11, wobei eine Zentrifugenretentionskapazität (CRC) 20 g/g oder mehr beträgt, wenn sie gemäß EDANA WSP 241.2 gemessen wird.

14. Superabsorbierender Polymerfilm nach Anspruch 11, wobei eine anfängliche Absorptionsrate 80 Sekunden oder weniger beträgt, die als die Zeit definiert ist, die zum Absorbieren von 27 ml einer NaCl (0,9 %)-Lösung nach dem Schneiden des superabsorbierenden Polymerfilms auf eine Größe von 12 cm*12 cm benötigt wird.

**Revendications**

1. Méthode de préparation d'un film polymère super absorbant, comprenant les étapes de:

   préparer une composition de monomères en mélangeant un monomère à base d'acide acrylique ayant des groupes acides au moins partiellement neutralisés, un épaississant à base de cellulose, un agent hydratant, un agent de réticulation, un initiateur de polymérisation, et un solvant;
   former un film de composition de monomère en coulant la composition de monomère sur un substrat;
   former un film polymère d'hydrogel en plaçant un photomasque ayant une ou plusieurs ouvertures sur le film de composition monomère, et en irradiant la lumière sur le photomasque ; et
   séchage du film de polymère d'hydrogel.

2. Méthode de préparation d'un film polymère super absorbant selon la revendication 1, dans laquelle la surface totale des ouvertures du masque photographique est comprise entre 30 et 70 %.

3. Méthode de préparation d'un film polymère super absorbant selon la revendication 1, dans laquelle le photomasque a une transmittance de 70 % ou moins par rapport aux ondes électromagnétiques dans une gamme de longueurs d'onde de 100 à 400 nm.

4. Méthode de préparation d'un film polymère super absorbant selon la revendication 1, dans laquelle chaque ouverture du masque photographique a indépendamment une surface de 1 à 2.500 mm$^2$.

5. Méthode de préparation d'un film polymère super absorbant selon la revendication 1, dans laquelle chaque ouverture du masque photographique a indépendamment une forme circulaire avec un diamètre de 2 à 50 mm.

6. Méthode de préparation d'un film polymère super absorbant selon la revendication 1, dans laquelle l'épaississant à base de cellulose est au moins un épaississant choisi dans le groupe constitué par la nanocellulose, l'hydroxyéthylcellulose, l'hydroxypropylcellulose, l'hydroxyéthylméthylcellulose, l'hydroxypropylméthylcellulose et la carboxyméthylcellulose sodique.

7. Méthode de préparation d'un film polymère super absorbant selon la revendication 1, dans laquelle l'agent hydratant est au moins un agent choisi dans le groupe constitué par la glycérine; la diglycérine; l'éthylène glycol; le propylène glycol; le butylène glycol; le sorbitol; le polyéthylène glycol; la polyglycérine-3; polyglycérine-6; polyglycérine-10; et le distéarate de polyglycéryle-10 et un dérivé de celui-ci (C3 à C18); acide citrique; citrate de triéthyle; citrate de méthyle; citrate de sodium; et 2-méthylcitrate trisodique.

8. Méthode de préparation d'un film polymère super absorbant selon la revendication 1, dans laquelle l'épaississant à base de cellulose est contenu dans une quantité de 0,01 à 5 parties en poids sur la base de 100 parties en poids de contenu solide dans la composition de monomère.

9. Méthode de préparation d'un film polymère super absorbant selon la revendication 1, dans laquelle l'agent hydratant est contenu dans une quantité de 5 à 70 parties en poids sur la base de 100 parties en poids du monomère à base d'acide acrylique.

10. Méthode de préparation d'un film polymère super absorbant selon la revendication 1, dans laquelle la composition de monomères a une viscosité à 25°C de 100 mPa*s à 5000 mPa*s, la viscosité étant mesurée comme indiqué dans la spécification.

11. Film polymère super absorbant, pouvant être obtenu par une méthode de préparation selon la revendication 1, comprenant un polymère dans lequel un monomère à base d'acide acrylique ayant des groupes acides au moins partiellement neutralisés est polymérisé en présence d'un épaississant à base de cellulose, d'un agent hydratant et d'un agent de réticulation, dans lequel une surface du film polymère super absorbant comprend deux régions ou plus ayant des degrés de réticulation différents.

12. Film polymère super absorbant de la revendication 11, dans lequel une première région ayant un premier degré de réticulation et une deuxième région ayant un deuxième degré de réticulation forment un motif régulier.

13. Film polymère super absorbant de la revendication 11, dans lequel la capacité de rétention centrifuge (CRC) est de 20 g/g ou plus lorsqu'elle est mesurée conformément à la norme EDANA WSP 241.2.

14. Film polymère super absorbant de la revendication 11, dans lequel un taux d'absorption initial est inférieur ou égal à 80 secondes, défini comme le temps nécessaire pour absorber 27 ml d'une solution de NaCl (0,9 %) après avoir découpé le film polymère super absorbant à une taille de 12 cm*12 cm.

【FIG. 1】

| No. | PHOTOMASK |
|-----|-----------|
| #1  | |
| #2  | |
| #3  | |
| #4  | |

【FIG. 2】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7154195 A
- US 2021100684 A1
- KR 20200035860 A
- EP 0700673 A1
- US 6242504 B1
- KR 20200064909 A

### Non-patent literature cited in the description

- **REINHOLD SCHWALM**. UV Coatings: Basics, Recent Developments and New Application. Elsevier, 2007, 115
- **ODIAN**. Principle of Polymerization. Wiley, 1981, 203